# EUROPEAN PATENT SPECIFICATION

(11) **EP 0 631 338 B1**
(45) Date of publication and mention of the grant of the patent: **05.04.2000**
(21) Application number: 94201564.5
(22) Date of filing: 01.06.1994
(51) Int. Cl.: H01M 10/18, H01M 2/02

(54) **Bipolar battery housing and method**
Gehäuse für bipoläre Batterie und Verfahren zur Herstellung
Boîtier pour batterie bipolaire et procédé de fabrication

(30) Priority: 21.06.1993 US 79033
(43) Date of publication of application: 28.12.1994
(73) Proprietor: GENERAL MOTORS CORPORATION, Detroit Michigan 48202 (US)
(72) Inventor: Meadows, Clarence Alfred, Muncie, Indiana 47302 (US); Adams, Robert Eugene, Selma, Indiana 47383 (US)
(74) Representative: Denton, Michael John

(56) References cited:
- EP-A- 0 402 265
- WO-A-87/04011
- FR-A- 1 024 163
- FR-A- 1 214 394
- FR-A- 2 304 188
- GB-A- 281 018
- GB-A- 2 160 704
- US-A- 2 471 781
- US-A- 3 600 233
- PATENT ABSTRACTS OF JAPAN vol. 13, no. 490 (E-841) 7 November 1989 & JP-A-01 195 673 (SHIN KOBE ELECTRIC MACH CO)

## Description

This invention relates to bipolar electric storage batteries of the face-to-face electrode type, and more particularly to a unique packaging arrangement therefor and method of assembling the battery.

Bipolar batteries employ either one of two types of bipolar electrodes, i.e., face-to-face or side-by-side. Face-to-face type bipolar electrodes, utilise an electrolyte-resistant, impervious, substantially planar, conductive septum having a first polarity active material on one face thereof and an opposite polarity active material on an opposite face thereof. It is known for the electrically-conductive septum that separates the opposite polarity active materials of the bipolar electrode to comprise either (1) a thin metal plate (eg, lead in the case of a Pb-acid battery), (2) an electrically-conductive polymer, or (3) a non-conductive polymer having a plurality of rivet-like conductors embedded therein for electrically communicating one face of the septum to the other. For a number of reasons, the use of solid metal plates is preferred for long-lived, high-power, bipolar batteries. A metal plate septum particularly useful for lead acid batteries is described in our co-pending patent application EP-A-0630063 (US-A-5344727) corresponding to United States patent application US Serial No 08/079,030 filed concurrently herewith. Other metal or conductive septums are useful with other types of battery systems (eg, alkaline batteries) as is well-known in the art.

The bipolar electrodes are mounted in non-conductive frames and stacked together such that opposite polarity faces of adjacent bipolar electrodes oppose each other across an electrolyte-filled gap which also contains an electrolyte-permeable, dendrite-suppressing separator (eg, microporous polyethylene, glass mat, or microporous PVC). One such battery is exemplified by US-A-3,728,158 (Poe et al).

The frames used to mount the bipolar electrodes are typically either clamped or adhesively secured together to form the finished battery. Neither are practical solutions to making such batteries. In this regard, clamping the frames typically adds extra weight to the system and results in an assembly susceptible to electrolyte leakage via any of the many seams between the many abutting frames. Adhesively securing the frames together on the other hand is extremely messy, especially when coupled with all of the handling, alignment, and assembly requirements for so many individual components to form the finished battery.

WO-A-87/04011 discloses a battery having separating walls formed from for example, polyurethane foam, which is forced into the housing or mould between the plates of the stack in a liquid state, and cured in situ. FR-A-1214394 discloses a method of forming, in situ, a battery housing by injection moulding of plastics material, with the plate stack kept under compression before hardening of the plastics material. EP-A-0402265 discloses a battery having a plastics foam surround and non-conductive frames. JP-A-01195673 discloses the use of a foaming resin in a battery cell, along with cell frames.

It is an object of the present invention to provide a unique bipolar battery packaging arrangement for face-to-face type bipolar batteries which includes a plurality of bipolar electrodes each engaged on its perimeter by a non-conductive frame, wherein the frames are stacked together and embedded in a polymeric material moulded in situ thereabout to seal the several seams and form a housing of the battery. It is another object of the present invention to provide such a battery wherein the housing comprises a closed-cell plastics foam material. It is a further object of the present invention to provide a unique method of assembling a gas-recombinant version of said battery having compressed fibrous glass mat separators of the type described in US-A-3,862,861. These and other objects and advantages of the present invention will become more readily apparent from the detailed description thereof which follows.

A bipolar battery, a method of assembling a bipolar battery and a method of forming a housing about a bipolar battery according to the present invention are characterised by the features specified in claims 1, 4 and, respectively, 6.

As a preferred application of the present invention involves Pb-acid storage batteries, the invention will be described in terms thereof, though it is not limited to such batteries. In a Pb-acid bipolar battery, the bipolar electrode comprises a lead plate septum having an adherent, porous coating on at least one face (preferably both faces) thereof for securely anchoring a lead-containing active material thereto. The coating comprises multiple layers of arc-sprayed, lead particles fused to each other, and to the face of the septum, providing a plurality of interconnecting, interstitial pores for anchoring a lead-containing active material (ie, Pb, PbO, or PbO2) to the septum [see patent application EP-A-0630063 (US-A-5344727) corresponding to US Serial No 08/079,030 (supra)]. The bipolar electrodes are mounted in non-conductive frames, have non-conductive lattices overlaying the faces thereof and are stacked together with spacer frames and monopolar electrodes (ie, at the ends of the stack) to form a complete bipolar battery as described in more detail in our co-pending patent application EP-A-0630066 (US-A-5326656) United States patent application Serial No 08/079,029, filed concurrently herewith. The monopolar electrodes in the end cells of the battery will preferably each comprise one of the bipolar electrodes having active material applied to only one face thereof. A terminal of the battery will preferably be moulded into an end wall of the battery and will contain tangs projecting therefrom into contact with an unpasted face of the bipolar electrode serving as a monopolar electrode. The tangs are preferably induction-welded to the septum of the monopolar electrode after the battery has been assembled.

In accordance with the present invention, the frames are embedded in a polymeric (eg, thermoplastic or thermoset polymer) housing moulded in situ thereabout to embed the stack and to shape the outside surface of the housing. In this regard, the electrode stack, along with end plates for the battery are clamped together in a mould cavity and fluid polymeric material flowed thereabout to fill the cavity and form the housing for the battery. The housing will be formed by injection-moulding hot thermoplastic material (eg, polyolefins such as polyethylene and polypropylene) into the cavity so as to embed the stack therein. Thermoset polymers may also be used. The polymer contains a foaming agent therein, which, upon heating, causes gases to form and foam the polymer. The use of foaming agents causes low-pressure expansion of the polymer for ready filling of the mould cavity without subjecting the electrode stack to deleteriously high injection-moulding pressures (eg, ca 82,737 kPa to 110,316 kPa (12,000 to 16,000 psi)) otherwise required to ensure complete "fill-out" of the mould cavity and to reduce shrinkage following coating. With the use of foaming agents in the polymer the injection-moulding pressures can be reduced to about 1/4 to about 1/3 the pressure otherwise required, depending on the amount of foaming agent used. Moulding the housing directly about the stack not only simplifies and combines the housing formation and battery assembly processes into a single operation but also prevents any leakage from between the seams of the stack. In the case of a gas-recombinant-type lead-acid battery having glass mat separators compressed between the electrodes, the mats are compressed by applying force to the ends of the stack, placing the stack into a mould under compression, and moulding the housing about the stack to hold the stack under compression. In a preferred embodiment, the mould halves serve to compress the stack.

The invention will be better understood when considered in the light of the following detailed description of a specific, preferred embodiment thereof which is given hereafter in conjunction with the accompanying drawings, in which:
Figure 1 is a front, elevational view of a bipolar electrode in accordance with the present invention;
Figure 2 is a sectioned, side elevational view of the bipolar electrode taken in the direction 2-2 of Figure 1;
Figures 3a, 3b and 3c are views like Figure 2 of alternative embodiments to the frame and lattice shown in Figure 2;
Figure 4 is a magnified view of zone 4 of Figure 2;
Figure 5 is a view like that of Figure 2, but having active material pasted on both sides of the electrode;
Figure 6 is a view like Figure 5, but with active material pasted on only one face of the electrode to form a monopolar electrode;
Figure 7 is a partially sectioned, front, elevational view of an inter-electrode spacing frame;
Figure 8 is a sectioned view of the spacing frame taken in the direction 8-8 of Figure 7;
Figure 9 is a front elevational view of an end wall of a bipolar battery;
Figure 10 is a sectional view of the end wall taken in the direction 10-10 of Figure 9;
Figure 11 is a sectional view of the end wall taken in the direction 11-11 of Figure 9;
Figure 12 is an exploded view of a bipolar battery stack;
Figure 13 is a perspective view of a bipolar battery in a separate housing; and
Figure 14 is a sectioned, side view of the bipolar battery taken in the direction 14-14 of Figure 13.

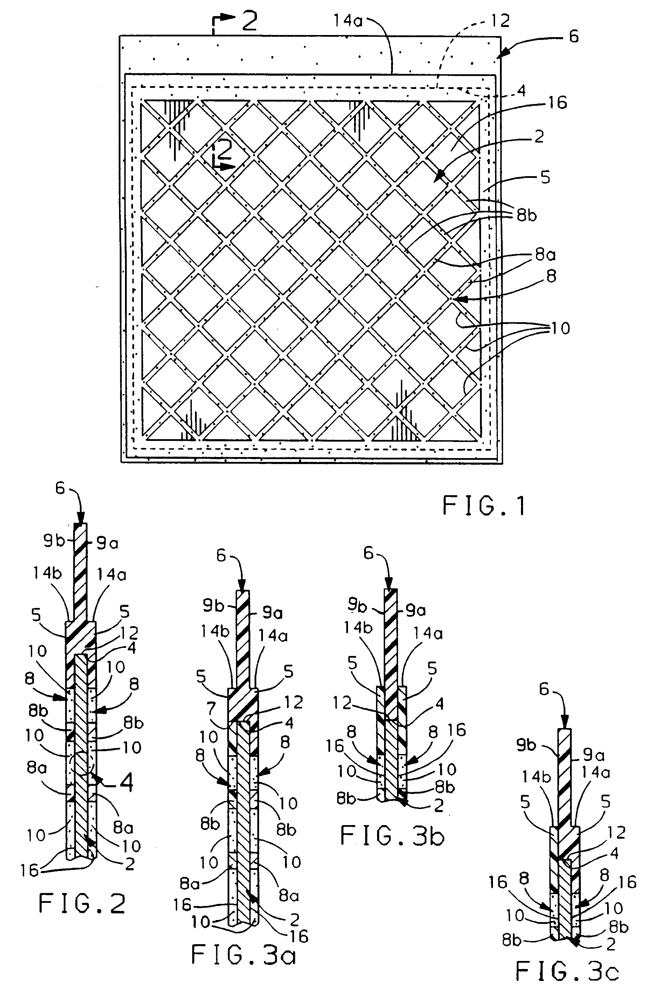

Figures 1-5 depict a bipolar electrode comprising a lead septum plate 2 encompassed by a non-conductive plastics frame 6 having an inner rim 4 engaging the periphery of the plate 2. The frame 6 is preferably insert-moulded about the plate 2, by positioning the plate in a mould and moulding the frame thereabout. Non-conductive (eg, polyolefin) lattices 8 comprising a plurality of criss-crossing lattice wires 8a and 8b define a plurality of pockets 10 overlaying the faces on opposite sides of the septum plate 2. As shown in Figure 2, the lattices 8 may be moulded as one piece with the frame 6 so that borders 5 of the lattices 8 are moulded with the frame 6 around an edge 12 of the plate 2. Alternatively, and as shown in Figures 3a, 3b and 3c, one or both of the lattices 8 may be moulded separately from the frame 6 and subsequently made integral therewith by bonding (eg, heat-sealing, ultrasonically bonding or adhesively bonding) thereto. As shown in Figure 3a, the edge 12 of the plate 2 is co-extensive with edges 7 of the borders 5 of the lattices 8, and the frame 6 is then moulded thereabout so as to bond to the edges 7 of the lattices 8 and to become integral therewith. Figures 3b and 3c show other self-evident variations of the junction between the lattice borders 5 and frame 6.

Shoulders 14a and 14b are formed at the junction between the borders 5 of the lattices 8 and the frame 6 and extend completely around the lattices 8. Like mesas, the lattices 8 stand in relief above faces 9a and 9b of the frame 6, and are sized to nest in complementary-shaped recesses formed in a spacer frame (to be described hereinafter) for aligning and interlocking the frames together and preventing lateral shifting thereof with respect to each other, and for providing a sufficiently large interfacial area between abutting frames to achieve a good electrolyte seal therebetween.

In the case of a Pb-acid bipolar battery having a septum comprising a lead plate, a porous coating 16 is provided on at least one face 18 of the septum plate 2, which coating comprises multiple layers of lead particles 20 fused to each other, and to the face 18, so as to define a plurality of interconnecting interstitial pores 22 therebetween. This coating is preferably formed by arc-spraying a plurality of molten lead droplets onto the face 18 of the plate 2 as described in our co-pending patent application EP-A-0630063 (US-A-5344727) corresponding to US Serial No 08/079,030 (supra).

For the preferred embodiment shown in Figure 2, the septum plate 2 is placed in an appropriate mould, and a plastics material (eg, thermoplastic or thermoset) is injected thereabout to concurrently form the frame 6 and lattice 8 in a single "insert-moulding" operation.

Following mounting of the septum plate 2 in the frame/lattices, an active material 24, having a first polarity, and an active material 26, having a second polarity, are respectively spread into the pockets 10 of the lattices 8, and, in the case of a Pb-acid battery, pressed into the coating 16 so as to impregnate the pores 22 thereof sufficiently to anchor the active material thereto.

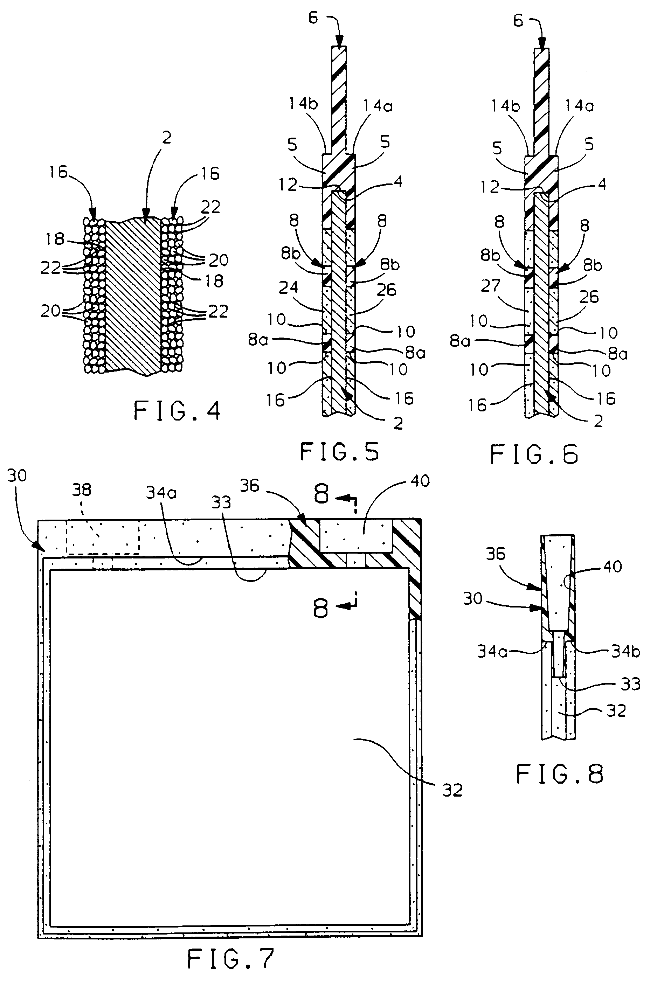

As best shown in Figure 6, one of the "bipolar" electrodes described above may be used as a monopolar electrode (ie, for use in the end cells of the battery) by pasting only one face thereof with active material paste 26. In the end cell, the pasted side 26 will confront an opposite polarity face of any adjacent bipolar electrode, whilst an unpasted face 27 will confront the end wall 44 of the battery. At one end of the battery, the active material paste on the monopolar electrode will comprise positive active material, and at the other end of the battery, the active material paste on the monopolar electrode will comprise negative active material. Alternatively, conventional pasted, grid-type monopolar electrodes mounted in an appropriate frame may be used as the monopolar electrodes in the end cells of the battery.

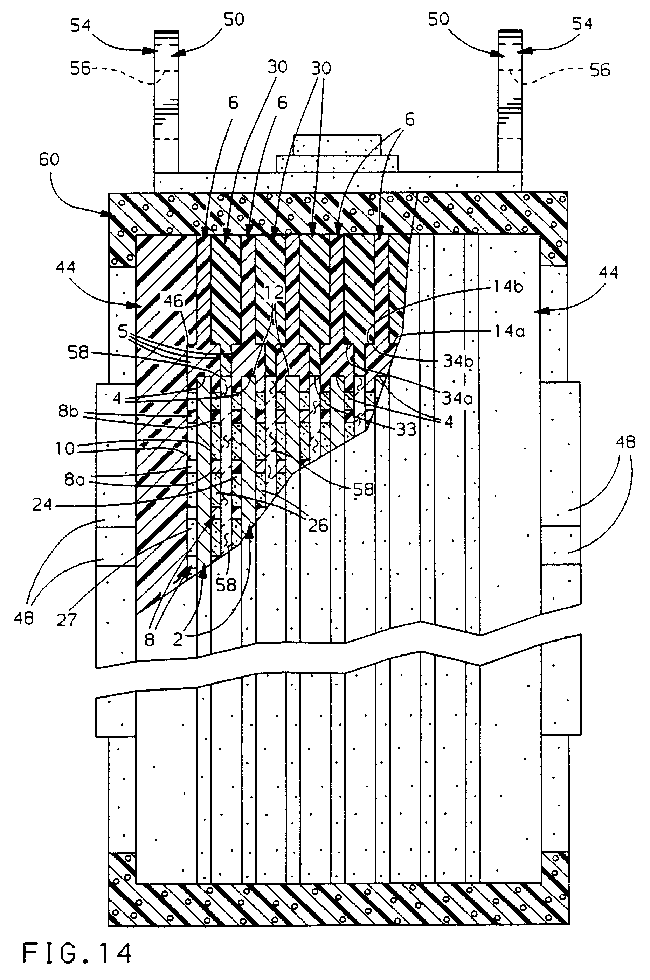

Figures 7 and 8 depict a spacer frame 30 which, in the finished battery, serves to space one bipolar electrode from the next adjacent electrode (ie, bipolar or monopolar) in the stack, and to define a region 32 between opposing faces of the adjacent electrodes for containing electrolyte of the battery and an interplate separator (eg, gas-recombinant-battery-type glass mat 58 (see Figure 14)). For convenience of handling and assembly, it is desirable to mould/embed the edges of the separator (eg, glass mat 58) directly into the frame 30 (not shown). The spacer frame 30 contains annular recesses 34a and 34b formed in the faces thereof and contiguous to an inner rim 33, which recesses are sized to receive, in nesting fashion, the shoulders 14a and 14b surrounding the mesa-like lattices 8. In lieu of the aforesaid spacer, the electrode frames themselves may be widened, or the like, in the direction normal to the principal plane of the electrode to provide an interelectrode electrolyte region without the need for a separate spacer frame 30. An upper side 36 of each of the spacer frames 30 includes openings 38 and 40 for admitting electrolyte into the respective regions 32 and/or for venting the regions as may be required after the stack of electrodes has been assembled. A single such opening may be used in lieu of two openings.

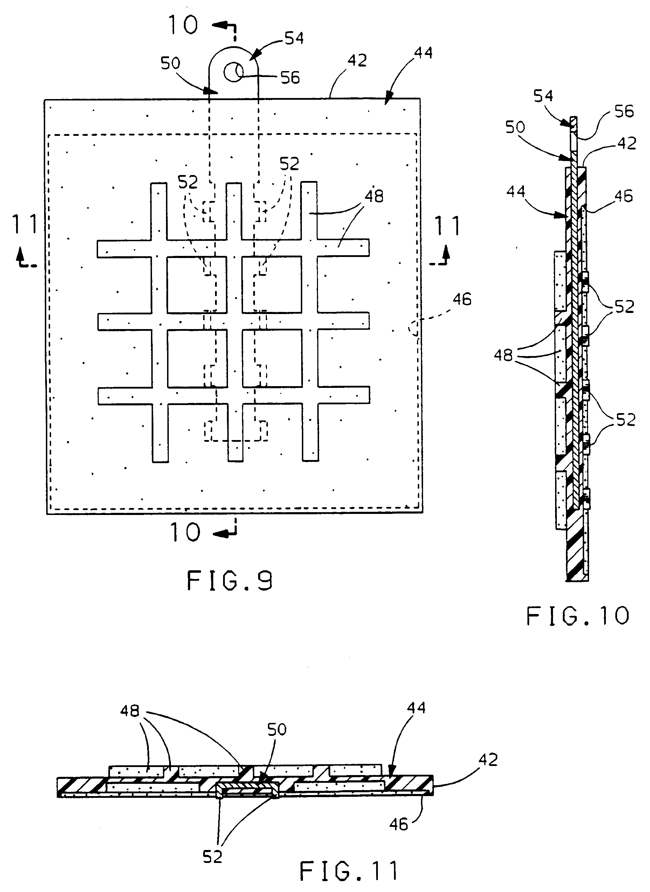

Figures 9-11 depict an end wall 44 of a bipolar electrode stack of a battery. The wall 44 comprises a non-conductive (eg, thermoplastic or thermoset plastics) material having an annular recess 46 therein adapted to receive a shoulder 14a or 14b on one of the monopolar electrodes discussed above (see Figure 6). A plurality of criss-crossing ribs 48 on the outside of the wall 44, opposite the recess 46, stiffens the end wall 44 and prevents bulging thereof under pressure. A metal blade 50, having a plurality of tangs 52 projecting outwardly therefrom into the end cell of the battery, is insert-moulded into the wall 44 and extends beyond a peripheral edge 42 thereof to form a terminal 54 for the battery. The terminal 54 has an appropriate aperture 56 adapted to receive a bolt, or the like, for connecting to an external electrical circuit. The tangs 52 projecting from the blade 50 extend into contact with the unpasted face 27 of the septum plate 2 and are induction-welded thereto after the stack has been assembled. The blade 50 will preferably comprise Sn-coated or Pb/Sn-coated copper wherein the Sn or Pb/Sn coating promotes bonding of the blade 50 to the plastics material forming the wall 44, and facilitates induction-welding of the blade 50 to the septum plate 2. Any conductive, corrosion-resisted metal, eg, titanium, can be used in place of copper.

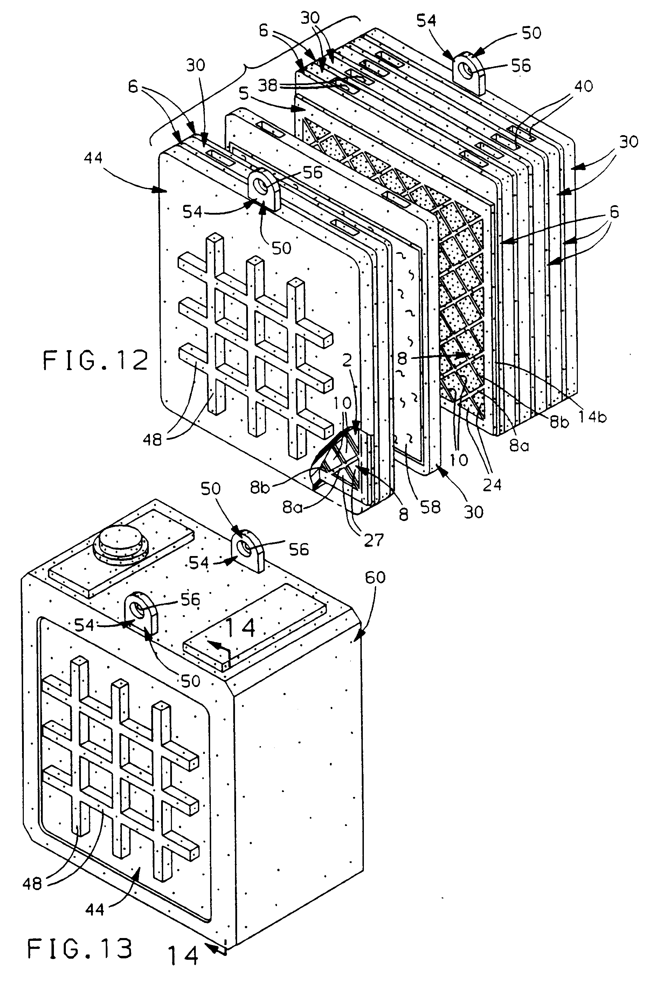

Figures 12-14 show a bipolar electrode stack before and after encasement in a separate housing. Figure 12 shows how the end walls 44 and the electrode and spacer frames nest one within the other to form a bipolar electrode stack. When fully nested within the spacer frames, the electrode frames 6 abut, face-to-face, the spacer frames 30 providing a relatively high interfacial sealing area at the seam therebetween and a tortuous path for electrolyte attempting to escape from the electrolyte regions 32 via the seams between the frames. Figure 12 also shows a microporous glass mat separator 58 positioned within the spacer frame 30. This separator will preferably be of the type commonly used in gas-recombinant batteries and accordingly is naturally thicker than the narrow dimension of the electrolyte region 32 and is compressed between the electrodes when the stack is assembled.

In accordance with the present invention, the assembled stack is positioned in an appropriate mould and molten polymeric material (eg, thermoplastic or thermoset) is injected thereabout to form an outer housing 60 which embeds the frames and holds them together (see Figure 13) in leak-tight fashion. Prior to moulding the housing, the stack is placed between the mould halves used to define the mould cavity for shaping the housing. The mould halves engage the end walls 44 and come together to compress the glass mat separators 58, nest the frames and hold the frames together during injection of the polymer. In this regard the glass mats 58 each have a thickness which is about 20% to about 50% greater than the electrolyte region between the electrodes, and the force exerted by the mould halves on the stack actually moves the frames together and compresses the mats 58 into their respective electrolyte retention regions 32. Alternatively, the stack may be banded together adjacent the top and bottom corners of the stack with a strapping material (eg, adhesive tape - not shown) which becomes embedded in the housing material after moulding. Nesting of the frames one with the other is particularly advantageous in connection with the present invention, as it prevents lateral shifting of the frames in the mould under the influence of the injection pressures.

The injected polymer will preferably contain about 20% by weight of a foaming agent (eg, F-CL Foaming Agent sold by Wilson Fiberfill International, USA) and is injected under low pressure about the stack. At temperatures in excess of 177°C (350°F) the foaming agent produces CO, CO₂ and ammoniacal foaming gases which expand and foam the plastics material to completely fill the mould cavity without subjecting the stack to the high injection-moulding pressures otherwise required to fill the mould cavity. The finished housing will preferably have a porosity of up to about twenty-five percent (25%) by volume which provides sufficient mould-filling capability without compromising housing strength. Moreover, the foamed container helps to insulate the components of the battery from the ambient temperature (eg, vehicle engine compartment heat).

## Claims

1. A bipolar battery comprising: a stack of substantially planar, bipolar electrodes each comprising a conductive, electrolyte-impervious, septum (2) having a positive polarity active material on one face of said septum (2), and an opposite polarity active material on an opposite face of said septum (2); a monopolar electrode at each end of said stack; non-conductive first frames (6) each embedding the perimeter of each said septum (2); non-conductive second frames (30) for spacing said electrodes from each other in said stack defining an electrolyte retention region (32) between adjacent electrodes; an electrolyte-absorbent mat in each said retention region between adjacent said electrodes; terminal means (50,52,54) engaging said monopolar electrodes for electrically connecting said battery to external electrical circuitry; and a polymeric housing (60) moulded in situ about said stack by using, as a starting material, a plastics material including an activatable expandable foaming agent, compressing the stack such that said frames (6,30) are held together in abutting relation to each other and said mats are compressed, injecting said material in molten form into the mould, activating said agent for foaming said material in the mould, and allowing said foamed plastics material to harden so as to retain the stack under compression.

2. A bipolar battery according to claim 1, in which said foaming agent produces a plastics foam having a porosity of up to about twenty-five percent (25%) by volume.

3. A bipolar battery according to claim 1, in which said polymeric housing (60) is moulded from a thermoplastic polymer.

4. A method of assembling a gas-recombinant, bipolar battery comprising a stack of bipolar electrodes each including a conductive, electrolyte impervious septum having a perimeter each embedded in a non-conductive first frame (6) and separated one from the other by an electrolyte-retention region (32) defined by a non-conductive second frame (30), and serving to space said electrodes from each other by a gap of predetermined width, the method comprising the steps of:
a. positioning a gas-recombinant-type fibrous glass mat separator (58) in said region (32) between said electrodes, said separator (58), in its uncompressed state, having a thickness greater than said gap width;
b. positioning said stack in a mould between a pair of opposing mould parts moveable to and fro with respect to each other, said mould defining a mould cavity for forming an external housing (60) around said stack;
c. moving said mould parts together so as to close said mould to compress said separators (58) and abut said frames one to the next;
d. injecting a molten plastics material into said cavity around said stack, said material including an expandable foaming agent activatable after injection of said material;
e. activating said foaming agent for foaming said material in said mould about said stack; and
f. allowing said plastics material to harden to form said housing (60) and to retain said stack under compression.

5. A method according to claim 4, in which said foaming agent is heat-activated to generate gas bubbles throughout the plastics material.

6. A method of forming a housing (60) about a bipolar battery comprising a stack of bipolar electrodes each including a conductive, electrolyte-impervious septum having a perimeter each embedded in a non-conductive first frame (6) and separated one from the other by an electrolyte-retention region (32) bounded by a non-conductive second frame (30) and containing an electrolyte-absorbent mat, the method comprising the steps of:
a. compressing said stack so as to compress said mat in said region and cause said frames to abut each other;
b. positioning said stack in a mould having a mould cavity for forming said housing (60);
c. injecting a molten plastics material into said cavity around said stack, said material including an expandable foaming agent activatable after injection of said material;
d. activating said foaming agent for foaming said material in said mould about said stack; and
e. allowing said foamed plastics material to harden to form said housing (60) and to retain the stack under compression.

7. A method according to claim 6, in which said foaming agent is heat-activated to generate gas bubbles throughout the plastics material.

## Patentansprüche

1. Bipolare Batterie mit:
einem Stapel von im wesentlichen ebenen, bipolaren Elektroden, von denen jede eine leitfähige, für Elektrolyte undurchlässige Trennwand (2) aufweist mit einem aktiven Material positiver Polarität auf einer Seite der Trennwand (2) und einem aktiven Material entgegengesetzter Polarität auf der gegenüberliegenden Seite der Trennwand (2); einer monopolaren Elektrode an jedem Ende des Stapels;
nichtleitfähigen ersten Rahmen (6), die jeweils den Umfang jeder Trennwand (2) umgeben;
nichtleitfähigen zweiten Rahmen (30), um die Elektroden in dem Stapel voneinander zu beabstanden und einen Rückhaltebereich (32) für den Elektrolyt zwischen benachbarten Elektroden zu definieren; einer den Elektrolyt absorbierenden Matte in jedem Rückhaltebereich zwischen benachbarten Elektroden;
die monopolaren Elektroden umfassenden Anschlußmitteln (50, 52, 54) zur elektrischen Verbindung der Batterie mit einem externen elektrischen Schaltkreis; und
einem Gehäuse (60) aus Polymermaterial, das in situ um den Stapel geformt ist unter Verwendung eines Kunststoffmaterials als Ausgangsmaterial mit einem aktivierbaren, expandierbaren Schäumungsmittel, das den Stapel derart komprimiert, daß die Rahmen (6, 30) in einer zueinander angrenzenden Lage zusammengehalten und die Matten komprimiert werden, wobei das Material im geschmolzenen Zustand in die Gußform gespritzt, das Schäumungsmittel zum Aufschäumen des Materials in der Gußform aktiviert und das aufgeschäumte Kunststoffmaterial ausgehärtet wird, um so den Stapel unter Kompression zu halten.

2. Bipolare Batterie gemäß Anspruch 1,
wobei das Schäumungsmittel einen Kunststoffschaum erzeugt, der eine Porösität von bis zu 25 Vol.-% aufweist.

3. Bipolare Batterie gemäß Anspruch 1,
wobei das Gehäuse (60) aus Polymermaterial aus einem thermoplastischem Polymer geformt ist.

4. Verfahren zur Herstellung einer gasrekombinanten, bipolaren Batterie mit einem Stapel aus bipolaren Elektroden, von denen jede eine leitfähige, für Elektrolyte undurchlässige Trennwand aufweist, deren Umfang jeweils in einem nichtleitfähigen ersten Rahmen (6) eingebettet ist und die durch einen Rückhaltebereich (32) für den Elektrolyt voneinander getrennt sind, der durch einen nichtleitfähigen zweiten Rahmen (30) definiert ist und dazu dient, die Elektroden durch einen Spalt vorgegebener Breite voneinander zu beabstanden, wobei das Verfahren folgende Schritte beinhaltet:
a. Positionieren eines Trennelements (58) vom gasrekombinanten Typ aus Glasfasermatte in dem Bereich (32) zwischen den Elektroden, wobei das Trennelement (58) in seinem unkomprimierten Zustand eine Dicke aufweist, die größer ist als die Spaltbreite;
b. Positionieren des Stapels in einer Gußform zwischen einem Paar von gegenüberliegenden, zueinander beweglichen Gußformteilen, wobei die Gußform einen Gußhohlraum zum Formen eines äußeren Gehäuses (60) um den Stapel herum definiert;
c. Zusammenfügen der Gußformteile, um die Gußform zu schließen, die Trennelemente (58) zu komprimieren und die Rahmen aneinanderzufügen;
d. Einspritzen eines geschmolzenen Kunststoffmaterials in den Gußhohlraum um den Stapel herum, wobei das Material ein expandierbares, nach dem Einspritzen des Materials aktivierbares Schäumungsmittel beinhaltet;
e. Aktivieren des Schäumungsmittels zum Aufschäumen des Materials in der Gußform um den Stapel herum; und
f. Aushärten des Kunststoffmaterials, um das Gehäuse (60) zu formen und den Stapel unter Kompression zu halten.

5. Verfahren gemäß Anspruch 4,
wobei das Schäumungsmittel durch Wärme aktivierbar ist, um Gasblasen in dem gesamten Kunststoffmaterial zu erzeugen.

6. Verfahren zur Herstellung eines Gehäuses (60) um eine bipolare Batterie mit einem Stapel von bipolaren Elektroden, von denen jede eine leitfähige, für Elektrolyte undurchlässige Trennwand beinhaltet, deren Umfang jeweils in einem nichtleitfähigen ersten Rahmen (6) eingebettet ist und die durch einen Rückhaltebereich (32) für den Elektrolyt voneinander getrennt sind, durch einen nichtleitfähigen zweiten Rahmen (30) gehalten werden und eine den Elektrolyt absorbierende Matte beinhalten, wobei das Verfahren die folgenden Schritte umfaßt:
a. Komprimieren des Stapels, so daß die Matten in dem Bereich komprimiert werden und die Rahmen aneinander anliegen;
b. Positionieren des Stapels in einer Gußform mit einem Gußhohlraum zum Formen des Gehäuses (60);
c. Einspritzen eines geschmolzenen Kunststoffmaterials in den Gußhohlraum um den Stapel herum, wobei das Material ein expandierbares, nach dem Einspritzen des Materials aktivierbares Schäumungsmittel beinhaltet;
d. Aktivieren des Schäumungsmittels zum Aufschäumen des Materials in der Gußform um den Stapel herum; und
e. Aushärten des aufgeschäumten Kunststoffmaterials, um das Gehäuse (60) zu formen und den Stapel unter Kompression zu halten.

7. Verfahren gemäß Anspruch 6,
wobei das Schäumungsmittel durch Wärme aktivierbar ist, um in dem gesamten Kunststoffmaterial Gasblasen zu erzeugen.

## Revendications

1. Batterie bipolaire comprenant : une pile d'électrodes bipolaires sensiblement planes, chacune d'elles comprenant une cloison (2) conductrice imperméable à l'électrolyte ayant une matière active de polarité positive sur une face de ladite cloison (2), et une matière active de polarité opposée sur une face opposée de ladite cloison (2); une électrode unipolaire à chaque extrémité de ladite pile; des premiers châssis non conducteurs (6) sur le pourtour de chaque dite cloison (2); des seconds châssis non conducteurs (30) pour espacer lesdites électrodes les unes des autres dans ladite pile définissant une région de retenue d'électrolyte (32) entre des électrodes adjacentes; un mat absorbeur d'électrolyte dans chaque dite région de retenue entre lesdites électrodes adjacentes; des moyens (50, 52, 54) formant bornes s'engageant avec lesdites électrodes unipolaires pour le raccordement électrique de ladite batterie au circuit électrique extérieur; et un boîtier en matière polymère (60) moulé in situ autour de ladite pile en utilisant, comme matière de départ, une matière plastique incluant un agent moussant expansible activable, comprimant la pile de telle sorte que lesdits châssis (6, 30) sont maintenus ensemble dans une relation de contiguïté les uns par rapport aux autres et lesdits mats sont comprimés, en injectant ladite matière sous forme fondue dans le moule, en activant ledit agent pour faire mousser ladite matière dans le moule, et en permettant à ladite matière plastique qui a moussé de durcir de façon à maintenir la pile à l'état comprimé.

2. Batterie bipolaire selon la revendication 1, dans laquelle ledit agent moussant produit une mousse de matière plastique dont la porosité atteint environ vingt cinq pour cent (25%) en volume.

3. Batterie bipolaire selon la revendication 1, dans laquelle ledit boîtier en matière polymère (60) est moulé à partir d'un polymère thermoplastique.

4. Procédé de montage d'une batterie bipolaire à recombinant gazeux comprenant une pile d'électrodes bipolaires, chacune d'elles incluant une cloison conductrice imperméable à l'électrolyte ayant un pourtour, chacune d'elles étant encastrée dans un premier châssis non conducteur (6) duquel elle est séparée par une région de retenue d'électrolyte (32) définie par un second châssis non conducteur (30) et servant à espacer lesdites électrodes les unes des autres en réalisant un espace de largeur prédéterminée, le procédé comprenant les étapes consistant à :
a. placer un séparateur en mat de fibre de verre de type à recombinant gazeux (58) dans ladite région (32) entre lesdites électrodes, ledit séparateur (58), à l'état non comprimé, ayant une épaisseur supérieure à la largeur dudit espace;
b. placer ladite pile dans un moule entre deux pièces de moule opposées déplaçables l'une par rapport à l'autre, ledit moule définissant une cavité de moule pour former un boîtier extérieur (60) autour de ladite pile;
c. déplacer lesdites pièces de moule ensemble de façon à fermer ledit moule pour comprimer lesdits séparateurs (58) et faire adjoindre un dit châssis avec le suivant ;
d. injecter une matière plastique fondue dans ladite cavité autour de ladite pile, ladite matière incluant un agent moussant expansible activable après injection de ladite matière ;
e. activer ledit agent moussant pour faire mousser ladite matière dans ledit moulé autour de ladite pile ; et
f. permettre à ladite matière plastique de durcir pour former ledit boîtier (60) et maintenir ladite pile à l'état comprimé.

5. Procédé selon la revendication 4, dans lequel ledit agent moussant est activé à la chaleur pour engendrer des bulles de gaz dans toute la matière plastique.

6. Procédé de formage d'un boîtier (60) autour d'une batterie bipolaire comprenant une pile d'électrodes bipolaires, chacune d'elles incluant une cloison conductrice imperméable à l'électrolyte ayant un pourtour, chacune d'elles étant incorporée dans un premier châssis non conducteur (6) duquel elle est séparé par une région de retenue d'électrolyte (32) délimitée par un second châssis non conducteur (30) et contenant un mat absorbeur d'électrolyte, le procédé comprenant les étapes consistant à :
a. comprimer ladite pile de façon à comprimer ledit mat dans ladite région et faire adjoindre lesdits châssis les uns aux autres ;
b. placer ladite pile dans un moule comportant une cavité de moule pour former ledit boîtier (60) ;
c. injecter une matière plastique fondue dans ladite cavité autour de ladite pile, ladite matière incluant un agent moussant expansible activable après injection de ladite matière ;
d. activer ledit agent moussant pour faire mousser ladite matière dans ledit moule autour de ladite pile ; et
e. permettre à ladite matière plastique qui a moussé de durcir pour former ledit boîtier (60) et maintenir la pile à l'état comprimé.

7. Procédé selon la revendication 6, dans lequel ledit agent moussant est activé à la chaleur pour engendrer des bulles de gaz dans toute la matière plastique.
